# EUROPÄISCHE PATENTSCHRIFT

(11) **EP 2 015 640 B1**
(45) Veröffentlichungstag und Bekanntmachung des Hinweises auf die Patenterteilung: **12.12.2012**
(21) Anmeldenummer: 07724293.1
(22) Anmeldetag: 11.04.2007
(51) Int. Cl.: A22C 25/14

(54) **WERKZEUG, VORRICHTUNG SOWIE VERFAHREN ZUM ENTWEIDEN VON IN DER BAUCHHÖHLE GEÖFFNETEN FISCHEN**
TOOL, DEVICE, AND METHOD FOR GUTTING FISH OPENED AT THE STOMACH CAVITY
OUTIL, DISPOSITIF ET PROCÉDÉ POUR VIDER DES POISSONS À LA CAVITÉ ABDOMINALE OUVERTE

(30) Priorität: 06.05.2006 DE 102006021526
(43) Veröffentlichungstag der Anmeldung: 21.01.2009
(73) Patentinhaber: NORDISCHER MASCHINENBAU RUD. BAADER GMBH + CO KG, 23560 Lübeck (DE)
(72) Erfinder: PAULSOHN, Carsten, 23566 Lübeck (DE); DANN, Andreas, 23569 Lübeck (DE); RÜSCH, Roland, 23558 Lübeck (DE); BRANDT, Manfred, 23564 Lübeck (DE)
(74) Vertreter: Stork Bamberger
(86) Internationale Anmeldenummer: PCT/EP2007/003355
(87) Internationale Veröffentlichungsnummer: WO 2007/128386

(56) Entgegenhaltungen:
- EP-A2- 0 398 017
- WO-A-2005/067724
- DE-A1- 10 137 647
- DE-A1- 19 829 376
- DE-T2- 69 824 008

## Beschreibung

Die Erfindung betrifft ein Werkzeug zum Entweiden von in der Bauchhöhle geöffneten Fischen, wobei das Werkzeug als Saugelement zum Absaugen der Eingeweide ausgebildet ist. Des Weiteren betrifft die Erfindung eine Vorrichtung zum Entweiden von in der Bauchhöhle geöffneten Fischen, umfassend ein Werkzeug zum Absaugen der Eingeweide, ein Messinstrument, das derart konfiguriert ist, um spezifische Fischdaten zu erfassen, sowie mindestens eine Steuereinheit zum Steuern des Werkzeugs in Abhängigkeit der von dem Messinstrument erfassten spezifischen Fischdaten. Weiterhin beinhaltet die Erfindung ein Verfahren zum Entweiden von in der Bauchhöhle geöffneten Fischen.

Beim Schlachten von Fischen, insbesondere der Salmo-Spezies, werden in der Praxis üblicherweise automatisierte Vorrichtungen eingesetzt, wie sie zum Beispiel aus der DE 698 24 008 T2 bekannt sind. Dabei wird die Bauchhöhle der Fische mittig mit einem Messer oder dergleichen geöffnet und die Eingeweide, die Blutniere, Häute und andere Innereien mittels einer Bearbeitungsstation, die mindestens ein Saugelement aufweist, durch Absaugen entnommen. Das Entweiden der Fische kann auch als Reinigen der Fische bezeichnet werden. Beim Entweiden bzw. Reinigen bleiben jedoch diverse Eingeweidereste, also Darmreste, Reste der Blutniere, Innereienreste sowie Blutansammlungen in der Bauchhöhle, die in einem nachgeordneten Schritt beseitigt bzw. entfernt werden müssen. Insbesondere verbleibt der am Anus befestigte Darm beim Entweiden/Reinigen in der Bauchhöhle. Unter Eingeweide werden u.a. sämtliche Innereien des Fisches, also auch die Blutniere, Blutreste, Häute, Gedärme etc. verstanden.

In der Praxis werden die Fische nach dem Entweiden auf ein Kontrollband geleitet, wo die Fische von Bedienpersonen kontrolliert und in der Regel manuell nachgereinigt werden. Auch das Nachreinigen ist ein Entweidevorgang. Hierzu verwenden die Bedienpersonen üblicherweise Handsauger, Spülelemente oder dergleichen. Diese Vorgehensweise ist jedoch personalintensiv und damit teuer. Des weiteren wird der eigentlich automatisierte Ablauf des Entweidens unterbrochen. Es sind auch Vorrichtungen zum Entweiden bzw. Reinigen bzw. Nachreinigen bekannt, die eine automatisierte Nachreinigung der entweideten Fische ermöglichen. Diese Vorrichtungen weisen mehrere Saugelemente auf, die in die Bauchhöhle abgesenkt werden und die in der Bauchhöhle verbleibenden Reste absaugen. Es hat sich jedoch gezeigt, dass trotz der Nachreinigung durch Absaugen noch Reste in der Bauchhöhle verbleiben. Das betrifft insbesondere den im Bereich des Anus liegenden und an diesem befestigten Darm, der dann wiederum manuell entfernt werden muss.

Aus dem Dokument EP 0 398 017 A2 ist ein Werkzeug zum Entweiden von in der Bauchhöhle geöffneten Fischen bekannt, das als Saugelement zum Absaugen der Eingeweide ausgebildet ist, wobei dem Saugelement ein Element zum Klemmen der zu entfernenden Eingeweide zugeordnet ist. Allerdings weist dieses Werkzeug lediglich eine einzige Öffnung auf, die entgegen der Förderrichtung der Fische weist. Dieses Werkzeug ist jedoch nicht geeignet, die Eingeweide vollständig und zuverlässig, aus der Bauchhöhle zu entfernen.

Es ist daher Aufgabe der vorliegenden Erfindung, ein Werkzeug zu schaffen, das ein zuverlässiges Entfernen der Eingeweide einschließlich des Darms ermöglicht. Des Weiteren ist es Aufgabe der Erfindung, eine Vorrichtung zum Entfernen der Eingeweide sowie ein entsprechendes Verfahren vorzuschlagen.

Die Aufgabe wird durch ein Werkzeug der eingangs genannten Art dadurch gelöst, dass dem Saugelement ein Element zum Klemmen und/oder Quetschen der zu entfernenden Eingeweide zugeordnet ist, wobei das Saugelement stirnseitig eine Öffnung und radial mindestens eine seitlich gerichtete Öffnung aufweist. Dadurch kann sichergestellt werden, dass auch mit der Bauchhöhle und/oder dem Anus oder anderweitig mit dem Fisch verbundene Eingeweide zuverlässig entfernt werden. Das Klemmen/Quetschen hat den besonderen Vorteil, dass insbesondere der Darm unmittelbar am Anus gelöst und entfernt werden kann.

Vorzugsweise ist das Werkzeug als Kombinationswerkzeug ausgebildet, derart, dass der Klemmmechanismus zum Klemmen und/oder Quetschen der Eingeweide integraler Bestandteil des Saugelementes ist. Dies gewährleistet eine besonders kompakte und zuverlässige Bauweise, wobei die Ausbildung als Einzelwerkzeug für das Klemmen/Quetschen einerseits und das Absaugen andererseits das sichere Abführen der Eingeweide erlaubt.

In einer bevorzugten Weiterbildung der Erfindung ist das Element zum Klemmen und/oder Quetschen der Eingeweide aus einem Schiebeelement gebildet, das aus einer oberen Warteposition in eine untere Klemmposition und umgekehrt bewegbar ist. Dadurch können Eingeweide besonders sauber insbesondere in Randbereichen der Bauchhöhle, z.B. auch im Bereich des Anus, geklemmt, gelöst und dann abgesaugt werden.

Eine zweckmäßige Ausgestaltung sieht vor, dass dem Saugelement ein Schabeelement zugeordnet ist. Mit dem Schabeelement kann die Bauchhöhle effektiv gereinigt werden.

Vorteilhafterweise weist das Schabeelement an seiner unteren, der Mittelgräte des Fisches zugewandten Seite einen Vorsprung auf. Dieser Vorsprung ist geeignet, in die so genannten Knochentaschen einzugreifen, so dass insbesondere die Knochentaschen im hinteren Bereich der Bauchhöhle, also im Bereich des Anus, gründlich gereinigt werden.

Des Weiteren wird die Aufgabe durch eine Vorrichtung der eingangs erwähnten Gattung dadurch gelöst, dass das Werkzeug nach einem der Ansprüche 1 bis 9 ausgebildet ist. Die sich daraus ergebenden Vorteile wurden weiter oben beschrieben, so dass an dieser Stelle auf eine Wiederholung verzichtet wird.

Vorteilhafterweise ist das Werkzeug in Transportrichtung T_{F} oder entgegen der Transportrichtung T_{F} der Fische bewegbar. Dies ermöglicht in aktiver Weise eine

Bewegung innerhalb der Bauchhöhle, so dass definierte Positionen innerhalb der Bauchhöhle ansteuerbar sind. Dadurch kann das Werkzeug exakt an die Positionen verfahren werden, an denen Eingeweide bzw. Eingeweidereste, als u.a. der Darm, gelöst und entfernt werden müssen.

Die Aufgabe wird auch durch ein eingangs genanntes Verfahren gelöst, das sich durch die folgenden Schritte auszeichnet: Erfassen spezifischer Fischdaten mittels eines Messinstrumentes, Eintauchen eines Werkzeuges zum Absaugen der Eingeweide in die geöffnete Bauchhöhle, Steuern des Werkzeugs an eine zuvor definierte Position innerhalb der Bauchhöhle mittels einer Steuereinheit, die mit dem Messinstrument und dem Werkzeug in Wirkverbindung steht, Klemmen/Quetschen der Eingeweide durch das Werkzeug, Erzeugen einer Relativbewegung zwischen dem Fisch und dem Werkzeug, und Absaugen der durch den vorherigen Schritt gelösten Eingeweide durch das Werkzeug. Zu den sich daraus ergebenden Vorteilen wird auf die vorherigen Abschnitte verwiesen.

Weitere Merkmale und bevorzugte und/oder zweckmäßige Ausführungsformen und Weiterbildungen ergeben sich aus den Unteransprüchen und der Beschreibung. Eine besonders bevorzugte Ausführungsform wird anhand der beigefügten Zeichnung näher erläutert. In der Zeichnung zeigt:
- Fig. 1: eine schematische Darstellung einer erfindungsgemäßen Vorrichtung zum Entweiden von in der Bauchhöhle geöffneten Fischen mit einem erfindungsgemäßen Werkzeug.
- Fig. 2: eine Seitenansicht des Werkzeugs zum Entweiden in einer geöffneten Position, also mit dem Element zum Klemmen/Quetschen in Warteposition,
- Fig. 3: eine Vorderansicht des Werkzeuges gemäß Figur 2,
- Fig. 4: eine Seitenansicht des Werkzeugs zum Entweiden in einer geschlossenen Position, also mit dem Element zum Klemmen/Quetschen in Klemmposition
- Fig. 5: eine Vorderansicht des Werkzeugs gemäß Figur 4,

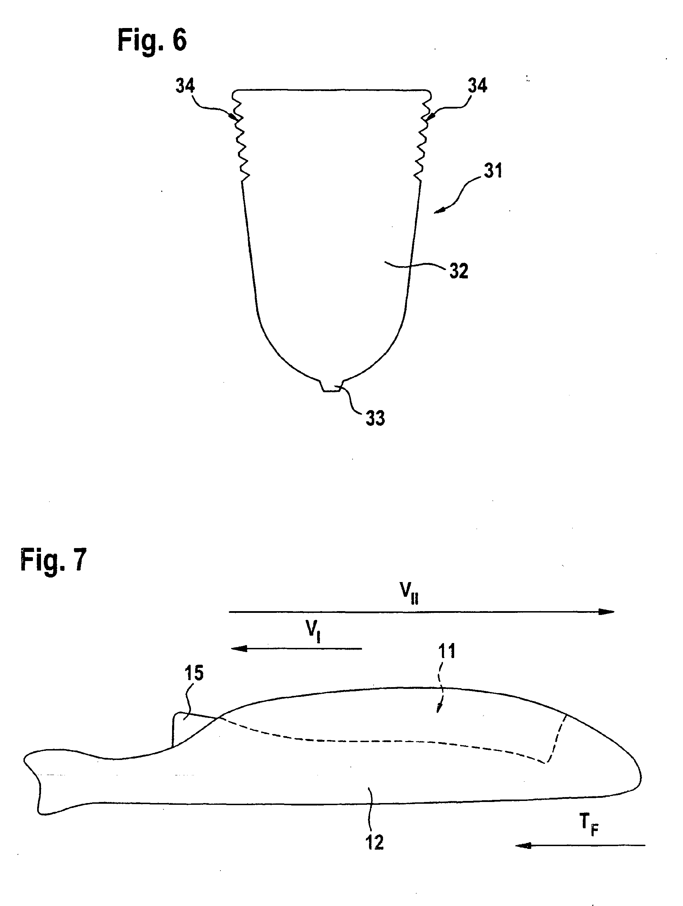

- Fig. 6: eine Vorderansicht auf ein Schabeelement als Bestandteil des Werkzeugs gemäß der Figuren 2 bis 5, und
- Fig. 7: eine schematische Darstellung eines Beispiels der Bewegungsrichtungen des Werkzeuges innerhalb der Bauchhöhle.

Die gezeigten Werkzeuge und Vorrichtungen dienen zum Nachreinigen von zuvor bereits entweideten bzw. gereinigten Fischen. Selbstverständlich sind die Werkzeuge und Vorrichtungen auch zum Entweiden bzw. Reinigen der Fische selbst einsetzbar.

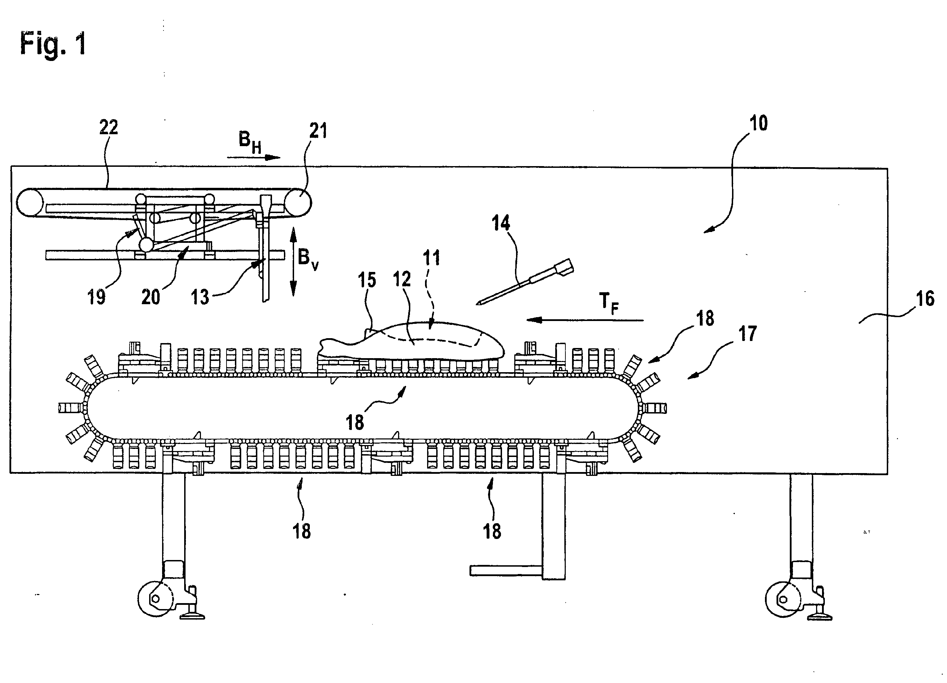

In der Figur 1 ist eine Vorrichtung 10 zum Entweiden von in der Bauchhöhle 11 geöffneten Fischen 12 gezeigt, die als Einzelmodul oder als Bestandteil einer Schlachtmaschine oder einer gesamten Schlachtlinie eingesetzt werden kann. Die Vorrichtung 10 selbst umfasst mindestens ein Werkzeug 13 zum Entfernen, insbesondere Absaugen der Eingeweide aus der Bauchhöhle 11, ein Messinstrument 14 sowie mindestens eine (nicht dargestellte) Steuereinheit. Das Messinstrument 14 ist derart ausgebildet bzw. konfiguriert, dass spezifische Fischdaten erfasst werden können. Das betrifft insbesondere die Länge und Höhe des Fisches 12, die Lage der Anusflosse 15 sowie den damit verbundenen Anus selbst. Zusätzlich zu den genannten geometrischen Daten können weitere Daten, auch Bilddaten erfasst werden. In der gezeigten Ausführung ist das Messinstrument 14 ein zangenartiger Fühler, mit dem insbesondere die exakte Lage der Anusflosse 15 und damit des Anus erfasst werden kann. Andere mechanische und/oder berührungslose Messmittel, insbesondere auch optische Elemente, wie z.B. Kameras etc., sind ebenfalls möglich. Die Steuereinheit verbindet das Messinstrument 14 mit dem Werkzeug 13. Genauer ist das Werkzeug 13 mittels der Steuereinheit auf der Basis der erfassten Daten durch das Messinstrument 14 steuerbar.

Der Vorrichtung 10, die sich üblicherweise in einem Gehäuse 16 befindet bzw. an einem Rahmen/Gestell angeordnet ist, ist ein Förderer 17 zugeordnet, der aber auch Bestandteil der Vorrichtung 10 sein kann. Der Förderer 17 weist mindestens eine, vorzugsweise aber mehrere Aufnahmen 18 zur Unterbringung der Fische 12 auf. Der Förderer 17 ist derart angeordnet, dass die Fische 12 unterhalb des Messinstrumentes 14 und des Werkzeuges 13 entlang in Transportrichtung T_{F} gefördert werden. Dabei werden die Fische 12 im gezeigten Beispiel auf dem Rücken liegend Schwanz voraus gefördert. Andere Förderrichtungen oder Fischausrichtungen sind ebenfalls möglich.

Die Vorrichtung 10 umfasst weiterhin Mittel 19 zum auf und ab Bewegen des Werkzeugs 13. Die Mittel 19 können in üblicher Weise ausgebildet sein, beispielsweise als Pneumatikzylinder oder dergleichen, der dem Werkzeug 13 zugeordnet ist. Mit dem Mittel 19 ist das Werkzeug 13 im Wesentlichen vertikal nach unten in die Bauchhöhle 11, also in die Arbeitsposition, absenkbar, und nach oben, also in eine Warteposition, verfahrbar. Die Bewegungsrichtung ist in der Figur 1 mit B_{V} bezeichnet. Das Werkzeug 13 ist zusätzlich in im Wesentlichen horizontaler Richtung (siehe Pfeil B_{H}), also in Transportrichtung T_{F} bzw. entgegen der Transportrichtung T_{F} bewegbar bzw. verfahrbar. Dazu ist das Werkzeug 13 in der beschriebenen Ausführungsform an einem Schlitten 20 oder dergleichen angeordnet, der mittels Schrittmotor 21 o.ä. über einen Zahnriemen 22 oder dergleichen antreibbar ist. Die Verfahrbarkeit des Schlittens 20 bzw. des Werkzeugs 13 kann aber auch in anderer üblicher Weise realisiert sein.

Zentraler Bestandteil der Vorrichtung 10 ist das Werkzeug 13, das auch als Einzelteil an bestehenden Schlacht- und/oder Reinigungsvorrichtungen nachrüstbar ist. Das Werkzeug ist als Saugelement 23 zum Absaugen der Eingeweide ausgebildet. Das im folgenden beschriebene Werkzeug 13 weist gegenüber herkömmlichen Saugelementen jedoch mehrere Funktionalitäten auf. Das als Saugkratzer ausgebildete Saugelement 23 weist einen Saugkanal 24 auf, der an ein nicht dargestelltes Vakuumsystem angeschlossen ist. An seinem freien Ende 25 weist das Saugelement 23 eine erste Öffnung 26 auf, die stirnseitig aus dem Saugkanal 24 austritt. Diese Öffnung 26 dient insbesondere zur Absaugung der Blutniere bzw. des Inhaltes derselben.

Das Saugelement 23 verfügt weiterhin über eine zweite Öffnung 27, die sich ebenfalls im Bereich des freien Endes 25 befindet. Allerdings ist die zweite Öffnung 27 vom Saugkanal 24 betrachtet radial gerichtet. Die seitlich gerichtete Öffnung 27 ist zu drei Seiten hin gerichtet und dient insbesondere zur Absaugung der Eingeweide, speziell des Darms. Die Öffnung 27 ist bei Bedarf mindestens teilweise verschließbar bzw. abdeckbar. Genauer ist die seitlich gerichtete Öffnung 27 auf der den Eingeweiden zugewandte Seite verschließbar. Dies kann durch Klappen, Schieber oder in anderer Weise realisiert werden. Die bevorzugte Art, einen Teil der Öffnung 27 zu schließen, wird weiter unten beschrieben. Für den Fall, dass die Öffnung 27 teilweise, nämlich an einer Seite, geschlossen ist, verbleiben jedoch zwei gegenüberliegende Seiten, die geöffnet sind, so dass die Öffnung 27 dann eine Art Durchgangsöffnung bildet, die quer zum Saugkanal 24 und durch diesen hindurch verläuft.

Dem Saugelement 23 ist des Weiteren ein Element 35 zugeordnet, mit dem unmittelbar auf die Eingeweide eingewirkt werden kann. Anders ausgedrückt ist das Werkzeug 13 ein Kombinationswerkzeug. Das Element 35 dient nämlich zum Klemmen und/oder Quetschen der zu entfernenden Eingeweide. Dazu sind verschiedene Ausbildungen des Elementes 35 geeignet, beispielsweise gegenläufig rotierende Walzen, Spangen sowie andere einteilige oder mehrteilige Bauteile. Der Klemmmechanismus, der im Folgenden detaillierter beschrieben wird, ist bevorzugt integraler Bestandteil des Saugelementes 23, so dass mit einem einzelnen Werkzeug 13 mehrere Funktionen ausführbar sind.

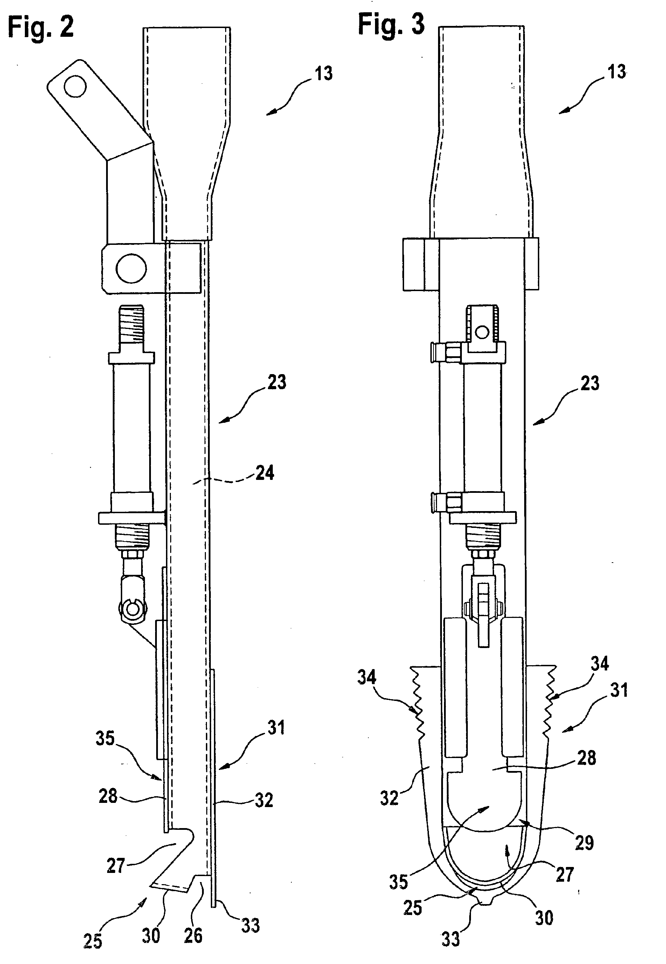

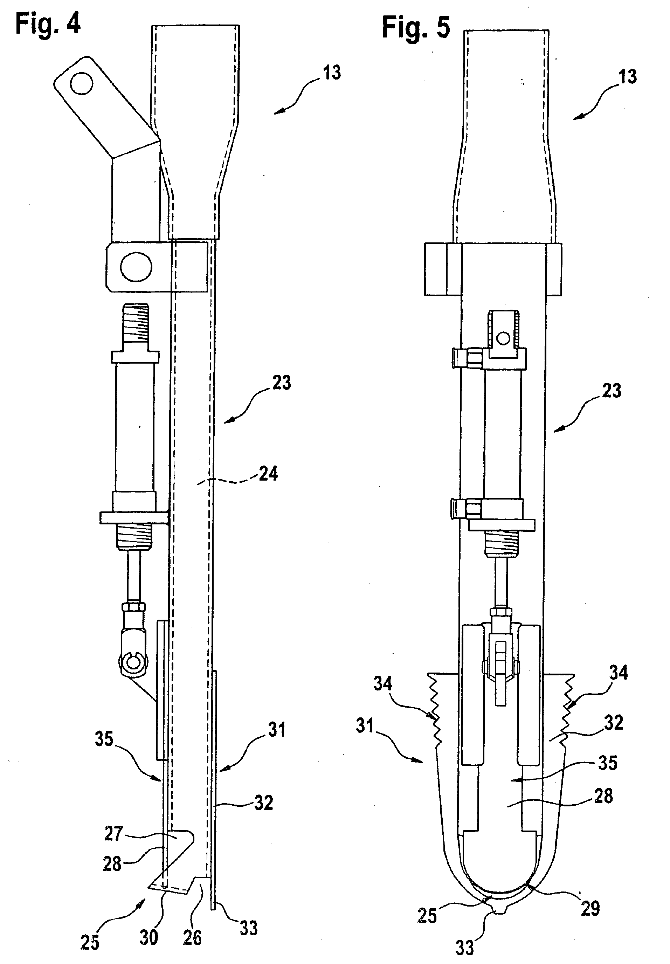

Das Element 35, also der Klemmmechanismus, ist aus einem Schiebeelement 28 gebildet, das aus einer oberen Warteposition (siehe Figuren 2 und 3) in eine untere Klemmposition (siehe Figuren 4 und5) und umgekehrt bewegbar ist. Genauer ist das Schiebeelement 28 in Längsrichtung des Saugelementes 23 auf und ab bewegbar. In der unteren Klemmposition steht das Schiebeelement 28 in Wirkverbindung mit dem Saugelement 23. Hierzu ist das Schiebeelement 28 formmäßig an die Öffnung 27 angepasst. Anders ausgedrückt weist das Schiebeelement 28 ein schaufelförmiges freies Ende 29 auf, das an die Formgebung der Öffnung 27 angepasst ist, also formschlüssig vor die Öffnung 27 schiebbar ist, so dass eingesammelte und aufgenommene Eingeweide, Därme oder dergleichen zwischen dem Schiebeelement 28 und einer unteren Wand 30 des Saugelementes 23 einklemmbar sind.

Dem Saugelement 23 ist weiterhin optional ein Schabeelement 31 zugeordnet. Das Schabeelement 31 ist auf der dem Schiebeelement 28 gegenüberliegenden Seite lösbar am Saugelement 23 befestigt. Das Schabeelement 31 ist als Schabeplatte 32 ausgebildet und in Längsrichtung des Saugelementes 23 verstellbar. Dadurch lässt sich der Überstand der Schabeplatte 32 über das freie Ende 25 des Saugelementes 23 hinaus variieren. An dem unteren Ende der Schabeplatte 32, also auf der der Mittelgräte des Fisches 12 zugewandten Seite, weist die Schabeplatte 32 einen Vorsprung 33 auf, mit dem in Knochentaschen des Fisches 12 eingreifbar ist. Zusätzlich kann die Schabeplatte 32 seitlich zu beiden Seiten eine Struktur 34 aufweisen, mittels der ein zusätzlicher Reinigungseffekt erzielbar ist. Beispielhaft ist eine Rillung der Seitenkanten gezeigt.

Wie weiter oben bereits erwähnt, ist das Saugelement 23 an ein Vakuumsystem anzuschließen. Des Weiteren ist das Werkzeug 13 an eine Steuereinheit anschließbar, um eine Wirkverbindung zwischen dem Werkzeug 13 und einem vorgeschalteten Messmittel herzustellen.

Das Entweiden bzw. speziell die Nachreinigung der Fische 12 wird im Folgenden anhand der Figuren näher beschrieben:

Durch das Messinstrument 14 wird die Lage der Anusflosse 15 und damit des Anus exakt bestimmt. Auf der Basis der ermittelten Daten wird das Werkzeug 13 durch die Steuereinheit in Transportrichtung T_{F} des Fisches 12 vor der Anusflosse 15 in die Bauchhöhle 11 verfahren, und zwar vorzugsweise so tief, dass das freie Ende 25 des Werkzeuges 13 bzw. des Saugelementes 23 auf der Mittelgräte des Fisches 12 aufsetzt. Das Saugelement 23 wird dann, während der Fisch 12 kontinuierlich in Transportrichtung T_{F} durch die Vorrichtung 10 transportiert wird, zum Anus bewegt, und zwar in Verfahrrichtung V_{I}, die der Transportrichtung T_{F} entspricht. Dabei kann optional in vertikaler Richtung ein Druck des Saugelementes 23 auf die Mittelgräte aufrechterhalten werden, um insbesondere die Blutniere druckbeaufschlagt zu reinigen. Die Geschwindigkeit, mit der das Werkzeug 13 bzw. das Saugelement 23 bewegt wird, ist größer als die Transportgeschwindigkeit der Fische 12.

Während des Aufenthalts des Saugelementes 23 in der Bauchhöhle 11 werden Eingeweide etc. gelöst und abgesaugt. Dies erfolgt insbesondere durch die Öffnung 26 des Saugelementes 23. Auch wird insbesondere der am Anus befestigte Darm vom Saugelement 23 angesaugt, und zwar durch die Öffnung 27 des Saugelementes 23. Während der voran gegangenen Arbeitsschritte ist das Element 35, also das Schiebeelement 28 in der oberen Warteposition, so dass die Öffnung 27 vollständig geöffnet ist. Wenn das Saugelement 23 den Anus erreicht hat, wird das Schiebeelement 28 nach unten in die Klemmposition bewegt, so dass der Darm zwischen dem Schiebeelement 28 und dem Saugelement 23 eingeklemmt ist. Durch die Klemmung ist die Öffnung 27 an der dem Anus bzw. Darm zugewandten Seite geschlossen, während der Darm weiterhin durch die verbleibenden seitlichen Öffnungen der Öffnung 27 angesaugt wird. Bei der Bewegung in Richtung des Schwanzes werden die Knochentaschen des Fisches 12 insbesondere durch die Schabeplatte 32 mit dem Vorsprung 33 gereinigt.

Dadurch, dass der Fisch 12 in Transportrichtung T_{F} weiter transportiert wird und das Saugelement 23 bei Erreichen des Anus stehen bleibt bzw. sogar in die entgegen gesetzte Richtung V_{II} in Richtung des Kopfes bewegt wird, reißt der Darm unmittelbar am Anus, wo der Darm eine Art Perforation durch eine dünne Darmwand aufweist, ab. Bei dem Verfahren in Richtung Kopf wird weiterhin die Blutniere durch Kratzen und Saugen bis zum Ende der Bauchhöhle 11 im Bereich des Kopfes gereinigt. Das Ergebnis ist ein vollständig gesäuberter Fisch 12, der ohne weitere manuelle Nachreinigung weiter verarbeitet werden kann.

Wie beschrieben, dient das Verfahren insbesondere dazu, bereits entweidete Fische 12 nachzureinigen, indem neben den beim eigentlichen Entweidevorgang in der Bauchhöhle 11 zurück gelassenen Resten auch der Darm vom Anus gelöst und entfernt wird. Andere Entweideschritte bzw. Reinigungsschritte sind in entsprechender Form selbstverständlich ebenfalls möglich.

## Patentansprüche

1. Werkzeug zum Entweiden von in der Bauchhöhle (11) geöffneten Fischen (12), wobei das Werkzeug (13) als Saugelement (23) zum Absaugen der Eingeweide ausgebildet ist, wobei dem Saugelement (23) ein Element (35) zum Klemmen und/oder Quetschen der zu entfernenden Eingeweide zugeordnet ist, dadurch gekennzechnet, dass das Saugelement (23) stirnseitig eine Öffnung (26) und radial mindestens eine seitlich gerichtete Öffnung (27) aufweist.

2. Werkzeug nach Anspruch 1, **dadurch gekennzeichnet, dass** das Saugelement (23) als Saugkratzer ausgebildet ist.

3. Werkzeug nach Anspruch 1 oder 2, **dadurch gekennzeichnet, dass** das Werkzeug (13) als Kombinationswerkzeug ausgebildet ist, derart, dass der Klemmmechanismus zum Klemmen und/oder Quetschen der Eingeweide integraler Bestandteil des Saugelementes (23) ist.

4. Werkzeug nach einem der Ansprüche 1 bis 3, **dadurch gekennzeichnet, dass** die seitlich gerichtete Öffnung (27) in radialer Richtung zu drei Seiten hin ausgebildet ist.

5. Werkzeug nach einem der Ansprüche 1 bis 4, **dadurch gekennzeichnet, dass** das Element (35) zum Klemmen und/oder Quetschen der Eingeweide aus einem Schiebeelement (28) gebildet ist, das aus einer oberen Warteposition in eine untere Klemmposition und umgekehrt bewegbar ist.

6. Werkzeug nach Anspruch 5 **dadurch gekennzeichnet, dass** das Schiebeelement (28) in Längsrichtung des Saugelementes (23) auf und ab bewegbar ausgebildet ist.

7. Werkzeug nach einem der Ansprüche 1 bis 6, **dadurch gekennzeichnet, dass** dem Saugelement (23) ein Schabeelement (31) zugeordnet ist.

8. Werkzeug nach Anspruch 7, **dadurch gekennzeichnet, dass** das Schabeelement (31) über das freie Ende (25) des Saugelementes (23) hinaus ragt.

9. Werkzeug nach einem der Ansprüche 1 bis 8, **dadurch gekennzeichnet, dass** es an eine Steuereinheit anschließbar und über die Steuereinheit mit einem Messinstrument zur Erfassung spezifischer Fischdaten in Wirkverbindung bringbar ist.

10. Vorrichtung zum Entweiden von in der Bauchhöhle (11) geöffneten Fischen (12), umfassend ein Werkzeug (13) zum Absaugen der Eingeweide, ein Messinstrument (14), das derart konfiguriert ist, um spezifische Fischdaten zu erfassen, sowie mindestens eine Steuereinheit zum Steuern des Werkzeugs (13) in Abhängigkeit der von dem Messinstrument (14) erfassten spezifischen Fischdaten, **dadurch gekennzeichnet, dass** das Werkzeug (13) nach einem der Ansprüche 1 bis 9 ausgebildet ist.

11. Vorrichtung nach Anspruch 10, **dadurch gekennzeichnet, dass** die Vorrichtung (10) Mittel (19) zum auf und ab Bewegen des Werkzeuges (13) umfasst.

12. Vorrichtung nach Anspruch 10 oder 11, **dadurch gekennzeichnet, dass** das Werkzeug (13) in Transportrichtung T_{F} oder entgegen der Transportrichtung T_{F} der Fische (12) bewegbar ist.

13. Verfahren zum Entweiden von in der Bauchhöhle (11) geöffneten und bereits mindestens teilweise entweideten Fischen (12) mit einer Vorrichtung nach einem der Ansprüche 10 bis 12, **gekennzeichnet durch** die folgenden Bearbeitungsschritte:
- Erfassen spezifischer Fischdaten mittels eines Messinstrumentes (14),
- Eintauchen eines Werkzeuges (13) zum Absaugen der Eingeweide in die geöffnete Bauchhöhle (11),
- Steuern des Werkzeugs (13) an eine zuvor definierte Position innerhalb der Bauchhöhle (11) mittels einer Steuereinheit, die mit dem Messinstrument (14) und dem Werkzeug (13) in Wirkverbindung steht,
- Klemmen/Quetschen der Eingeweide **durch** das Werkzeug (13),
- Erzeugen einer Relativbewegung zwischen dem Fisch (12) und dem Werkzeug (13), und
- Absaugen der **durch** den vorherigen Schritt gelösten Eingeweide **durch** das Werkzeug (13).

14. Verfahren nach Anspruch 13, **dadurch gekennzeichnet, dass** der am Anus befindliche Darm von dem Werkzeug (13) eingeklemmt und gelöst wird.

15. Verfahren nach Anspruch 14, **dadurch gekennzeichnet, dass** das Lösen durch eine Relativbewegung des Werkzeuges (13) entgegen der Transportrichtung T_{F} der Schwanz voraus geförderten Fische (12) erfolgt.

## Claims

1. Tool for gutting fish (12) which have been opened at the ventral cavity (11), the tool (13) being designed as a suction element (23) for extraction of the entrails, wherein the suction element (23) is allocated an element (35) for clamping and/or squeezing the entrails to be removed, **characterized in that** the suction element (23) has at the end an opening (26) and radially at least one laterally directed opening (27).

2. Tool according to claim 1, **characterised in that** the suction element (23) is designed as a suction scraper.

3. Tool according to claim 1 or 2, **characterised in that** the tool (13) is designed as a combination tool, such that the clamping mechanism for clamping and/or squeezing the entrails is an integral part of the suction element (23).

4. Tool according to any of claims 1 to 3, **characterised in that** the laterally directed opening (27) is formed in a radial direction towards three sides.

5. Tool according to any of claims 1 to 4, **characterised in that** the element (35) for clamping and/or squeezing the entrails is composed of a sliding element (28) which is movable out of an upper standby position into a lower clamping position and vice versa.

6. Tool according to claim 5, **characterised in that** the sliding element (28) is movable up and down in the longitudinal direction of the suction element (23).

7. Tool according to any of claims 1 to 6, **characterised in that** the suction element (23) is allocated a scraping element (31).

8. Tool according to claim 7, **characterised in that** the scraping element (31) projects beyond the free end (25) of the suction element (23).

9. Tool according to any of claims 1 to 8, **characterised in that** it can be connected to a control unit, and operatively connected by the control unit to a measuring instrument for detecting specific fish data.

10. Apparatus for gutting fish (12) which have been opened at the ventral cavity (11), including a tool (13) for extraction of the entrails, a measuring instrument (14) which is configured so as to detect specific fish data, and at least one control unit for controlling the tool (13) as a function of the specific fish data detected by the measuring instrument (14), **characterised in that** the tool (13) is designed according to any of claims 1 to 9.

11. Apparatus according to claim 10, **characterised in that** the apparatus (10) includes means (19) for moving the tool (13) up and down.

12. Apparatus according to claim 10 or 11, **characterised in that** the tool (13) is movable in the direction of transport TF or in the direction opposite the direction of transport TF of the fish (12).

13. Method for gutting fish (12) which have been opened at the ventral cavity (11) and already at least partially gutted by an apparatus according to any one of claims 10 to 12, **characterised by** the following processing steps:
- detection of specific fish data by means of a measuring instrument (14),
- immersion of a tool (13) for extracting the entrails in the opened ventral cavity (11),
- steering of the tool (13) to a predefined position within the ventral cavity (11) by means of a control unit which is operatively connected to the measuring instrument (14) and the tool (13),
- clamping/squeezing of the entrails by the tool (13),
- production of a relative movement between the fish (12) and the tool (13), and
- extraction by the tool (13) of the entrails released by the previous step.

14. Method according to claim 13, **characterised in that** the intestine which is located at the anus is clamped by the tool (13) and released.

15. Method according to claim 14, **characterised in that** release takes place by a relative movement of the tool (13) in the direction opposite the direction of transport TF of the fish (12) which are conveyed tail first.

## Revendications

1. Outil pour vider des poissons (12) à la cavité abdominale (11) ouverte, l'outil (13) se présentant sous forme d'un élément d'aspiration (23) pour aspirer les viscères, cet élément d'aspiration (23) étant associé à un élément (35) servant à bloquer et/ou à écraser les viscères à extraire, **caractérisé en ce que** l'élément d'aspiration (23) comporte une ouverture frontale (26) et, dans le sens radial, au moins une ouverture orientée latéralement (27).

2. Outil selon la revendication 1, **caractérisé en ce que** l'élément d'aspiration (23) se présente sous forme d'un grattoir aspirant.

3. Outil selon la revendication 1 ou 2, **caractérisé en ce que** l'outil (13) se présente sous forme d'un outil combiné, de telle manière que le mécanisme de blocage pour bloquer et/ou écraser les viscères fait partie intégrante de l'élément d'aspiration (23).

4. Outil selon l'une des revendications 1 à 3, **caractérisé en ce que** l'ouverture orientée latéralement (27) est réalisée dans le sens radial vers trois côtés.

5. Outil selon l'une des revendications 1 à 4, **caractérisé en ce que** l'élément (35) pour bloquer et/ou écraser les viscères est constitué d'un élément coulissant (28), lequel peut passer d'une position d'attente supérieure à une position de blocage inférieure, et inversement.

6. Outil selon la revendication 5, **caractérisé en ce que** l'élément coulissant (28) est réalisé de sorte qu'il peut aller et venir le long de l'élément d'aspiration (23).

7. Outil selon l'une des revendications 1 à 6, **caractérisé en ce que** l'élément d'aspiration (23) est associé à un élément de grattage (31).

8. Outil selon la revendication 7, **caractérisé en ce que** l'élément de grattage (31) dépasse l'extrémité libre (25) de l'élément d'aspiration (23).

9. Outil selon l'une des revendications 1 à 8, **caractérisé en ce qu'**il peut être connecté à une unité de commande et mis en liaison active, via l'unité de commande, avec un instrument de mesure pour recenser des données spécifiques relatives aux poissons.

10. Dispositif pour vider des poissons (12) à la cavité abdominale (11) ouverte, comprenant un outil (13) pour aspirer les viscères, un instrument de mesure (14) configuré de manière à recenser des données spécifiques relatives aux poissons, ainsi qu'au moins une unité de commande pour commander l'outil (13) en fonction des données spécifiques relatives aux poissons recensées par l'instrument de mesure (14), **caractérisé en ce que** l'outil (13) est réalisé selon l'une des revendications 1 à 9.

11. Dispositif selon la revendication 10, **caractérisé en ce que** le dispositif (10) comprend un moyen (19) de déplacer l'outil (13) de haut en bas.

12. Dispositif selon la revendication 10 ou 11, **caractérisé en ce que** l'outil (13) peut être déplacé dans le sens du transport T_{F} ou dans le sens inverse du transport T_{F} des poissons (12).

13. Procédé pour vider des poissons (12) à la cavité abdominale (11) ouverte et déjà au moins partiellement vidés avec un dispositif selon l'une des revendications 10 à 12 **caractérisé par** les étapes de traitement suivantes :
- recensement de données spécifiques relatives aux poissons au moyen d'un instrument de mesure (14),
- enfoncement d'un outil (13) dans la cavité abdominale (11) pour aspirer les viscères,
- contrôle de l'outil (13) à une position définie au préalable dans la cavité abdominale (11) au moyen d'une unité de commande qui est en liaison active avec l'instrument de mesure (14) et l'outil (13),
- blocage/écrasement des viscères à l'aide de l'outil (13),
- formation d'un mouvement relatif entre le poisson (12) et l'outil (13), et
- aspiration par l'outil (13) des viscères extraites lors de l'étape précédente.

14. Procédé selon la revendication 13, **caractérisé en ce que** le boyau qui se trouve au niveau de l'anus est bloqué et extrait par l'outil (13).

15. Procédé selon la revendication 14, **caractérisé en ce que** l'extraction se fait par un mouvement relatif de l'outil (13) dans le sens inverse du transport T_{F} des poissons (12) transportés la queue la première.
